(19) Europäisches Patentamt
European Patent Office
Office européen des brevets

(11) **EP 3 237 764 B1**

(12) **EUROPÄISCHE PATENTSCHRIFT**

(45) Veröffentlichungstag und Bekanntmachung des Hinweises auf die Patenterteilung:
**13.02.2019 Patentblatt 2019/07**

(21) Anmeldenummer: **15820455.2**

(22) Anmeldetag: **16.12.2015**

(51) Int Cl.:
*F16B 5/07* *(2006.01)*    *A44B 18/00* *(2006.01)*
*B81C 1/00* *(2006.01)*

(86) Internationale Anmeldenummer:
**PCT/EP2015/079955**

(87) Internationale Veröffentlichungsnummer:
**WO 2016/102264 (30.06.2016 Gazette 2016/26)**

(54) **STRUKTURIERTE OBERFLÄCHE MIT STUFENWEISE SCHALTBARER ADHÄSION**

STRUCTURED SURFACE WITH ADHESION SWITCHABLE IN STAGES

SURFACE STRUCTURÉE À ADHÉSION VARIABLE DE MANIÈRE ÉTAGÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2014 DE 102014119470**

(43) Veröffentlichungstag der Anmeldung:
**01.11.2017 Patentblatt 2017/44**

(73) Patentinhaber: **Leibniz-Institut für Neue Materialien gemeinnützige GmbH
66123 Saarbrücken (DE)**

(72) Erfinder:
• **KRONER, Elmar**
  **71272 Renningen (DE)**
• **YAGÜE ISLA, Paula**
  **38100 Braunschweig (DE)**

(74) Vertreter: **Patentanwälte Gierlich & Pischitzis Partnerschaft mbB
Gerbermühlstraße 11
60594 Frankfurt am Main (DE)**

(56) Entgegenhaltungen:
**DE-A1-102006 050 365    US-A1- 2008 280 085**

**Beschreibung**

Gebiet der Erfindung

Die Erfindung betrifft Oberflächen mit schaltbarer Adhäsion, sowie ein Verfahren zur Herstellung solcher Oberflächen.

Stand der Technik

Schaltbare Adhäsion ist für viele Anwendungen von großer Bedeutung. Verbindungen über Klebeverbindungen sind häufig nur für eine einmalige Anwendung geeignet, oder nutzen sich bei mehrfacher Verwendung schnell ab.
Ein wichtiges Gebiet der reversiblen Haftverbindung ist die Trockenadhäsion auf der Grundlage von van-der-Waals-Kräften ähnlich den Gecko-Strukturen. Diese Strukturen sind ablösbar und können auch mehrfach verwendet werden. Problematisch ist allerdings, dass die Adhäsionskraft einer Oberfläche nur eingeschränkt beeinflusst werden kann.
Aus der DE 10 2006 050 365 A1 ist eine strukturierte Oberfläche mit schaltbarer Haftfähigkeit bekannt.

Aufgabe

Aufgabe der Erfindung ist es, eine strukturierte Oberfläche anzugeben, deren Adhäsionskraft verändert werden kann, welche eine schaltbare Adhäsion aufweist. Außerdem wird ein Verfahren zum Herstellen solcher Oberflächen angegeben.

Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet.
Die Aufgabe wird durch eine strukturierte Oberfläche gelöst, wobei die Oberfläche eine Strukturierung aufweist, die eine Vielzahl von Vorsprüngen umfasst, die mindestens jeweils einen Stamm aufweisen, wobei der Stamm eine von der Oberfläche wegweisende Stirnfläche besitzt, dadurch gekennzeichnet, dass die Vielzahl von Vorsprüngen mindestens zwei Arten von Vorsprüngen umfasst, welche sich mindestens in der senkrechten Höhe der Stirnfläche unterscheiden, und das Material der Vorsprünge einen solchen Elastizitätsmodul aufweist, dass abhängig von der Belastung eine oder mehrere Arten der Vorsprünge über ihre Stirnflächen eine Adhäsionskraft ausbilden, welche höher ist als die durch die eventuelle Kompression der Vorsprünge ausgeübte Kraft; und mindestens eine Art der Vorsprünge ein solches Aspektverhältnis aufweist, dass bei dem Überschreiten einer bestimmten Belastung diese Vorsprünge abknicken und die Adhäsionskraft durch Abknicken der Stirnflächen stark abnimmt.
Unter der senkrechten Höhe der Stirnfläche wird der Abstand der Stirnfläche zu der Oberfläche verstanden, auf der die Vorsprünge angeordnet sind.
In einer bevorzugten Ausführungsform der Erfindung ist das Abknicken der Stirnflächen reversibel. Bevorzugt ist die Verformung der Vorsprünge reversibel. Die Vorsprünge sind ausreichend elastisch, so dass die strukturierte Oberfläche wieder in ihren Zustand ohne Belastung zurückkehren kann.
In einer bevorzugten Ausführungsform der Erfindung sind die Vorsprünge der strukturierten Oberfläche der Erfindung säulenartig ausgebildet. Dies bedeutet, dass es sich um bevorzugt senkrecht zur Oberfläche ausgebildete Vorsprünge handelt, welche einen Stamm und eine Stirnfläche aufweisen, wobei der Stamm und die Stirnfläche einen beliebigen Querschnitt aufweisen können (beispielsweise kreisförmig, oval, rechteckig, quadratisch, rautenförmig, sechseckig, fünfeckig, etc.).
Bevorzugt sind die Vorsprünge so ausgebildet, dass die senkrechte Projektion der Stirnfläche auf die Grundfläche des Vorsprungs mit der Grundfläche eine Überlappungsfläche bildet, wobei die Überlappungsfläche und die Projektion der Überlappungsfläche auf die Stirnfläche einen Körper aufspannt, welcher vollständig innerhalb des Vorsprungs liegt. In einer bevorzugten Ausführungsform der Erfindung umfasst die Überlappungsfläche mindestens 50 % der Grundfläche, bevorzugt mindestens 70 % der Grundfläche, besonders bevorzugt umfasst die Überlappungsfläche die gesamte Grundfläche.
In einer bevorzugten Ausführungsform ist die Stirnfläche parallel zur Grundfläche und zur Oberfläche ausgerichtet. Falls die Stirnflächen nicht parallel zur Oberfläche ausgerichtet sind und daher verschiedene senkrechte Höhen aufweisen, wird als senkrechte Höhe des Vorsprungs die mittlere senkrechte Höhe der Stirnfläche angesehen.
In einer bevorzugten Ausführungsform ist die Stirnfläche der Vorsprünge größer als die Grundfläche.
In eine bevorzugten Ausführungsform der Erfindung weist der Stamm des Vorsprungs bezogen auf seinen mittleren Durchmesser ein Aspektverhältnis von Höhe zu Durchmesser von 1 bis 100, bevorzugt von 1 bis 10, besonders bevorzugt von 2 bis 5 auf.

Unter dem mittleren Durchmesser wird dabei der Durchmesser des Kreises verstanden, der die gleiche Fläche wie der entsprechende Querschnitt des Vorsprungs aufweist, gemittelt über die gesamte Höhe des Vorsprungs.

In einer weiteren Ausführungsform der Erfindung liegt das Verhältnis der Höhe eines Vorsprungs zum Durchmesser bei einer bestimmten Höhe über die gesamte Höhe des Vorsprungs immer bei 1 bis 100, bevorzugt bei 1 bis 10, besonders bevorzugt bei 2 bis 5. Dabei wird unter Durchmesser der Durchmesser des Kreises verstanden, der die gleiche Fläche wie der entsprechende Querschnitt des Vorsprungs bei der bestimmten Höhe aufweist.

Mindestens eine Art von Vorsprüngen kann verbreiterte Stirnflächen aufweisen, sogenannte "mushroom"-Strukturen.

Das Aspektverhältnis des Stammes ist wichtig für die Kompression und das Abknicken bei zu hoher Belastung.

Die Stirnflächen der Vorsprünge können selbst strukturiert sein, um ihre Oberfläche zu erhöhen. In diesem Fall wird als senkrechte Höhe der Vorsprünge die mittlere senkrechte Höhe der Stirnfläche angesehen.

In einer bevorzugten Ausführungsform liegt die senkrechte Höhe aller Vorsprünge in einem Bereich von 1 $\mu$m bis 2 mm, bevorzugt in einem Bereich von 10 $\mu$m bis 2 mm.

In einer bevorzugten Ausführungsform entspricht die Grundfläche von der Fläche her einem Kreis mit einem Durchmesser zwischen 1 $\mu$m und 1 mm, bevorzugt zwischen 10 $\mu$m und 500 $\mu$m. In einer Ausführungsform ist die Grundfläche ein Kreis mit einem Durchmesser zwischen 1 $\mu$m und 1 mm, bevorzugt 10 $\mu$m und 500 $\mu$m.

Der mittlere Durchmesser der Stämme liegt bevorzugt zwischen 1 $\mu$m und 1 mm, bevorzugt zwischen 10 $\mu$m und 500 $\mu$m. Bevorzugt ist die Höhe und der mittlere Durchmesser entsprechend dem bevorzugten Aspektverhältnis angepasst.

In einer weiteren Ausführungsform der Erfindung weist mindestens eine Art von Vorsprüngen verbreiterte Stirnflächen auf, wobei dabei für diese Art von Vorsprüngen die Querschnittsfläche im oberen Drittel der senkrechten Höhe bis zur verbreiterten Stirnfläche hin zunimmt.

In einer bevorzugten Ausführungsform ist bei verbreiterten Stirnflächen die Oberfläche der Stirnfläche eines Vorsprungs mindestens 1,01 mal, bevorzugt mindestens 1,5 mal so groß wie die Fläche der Grundfläche eines Vorsprungs. Sie kann beispielsweise um den Faktor 1,01 bis 20 größer sein.

In einer weiteren Ausführungsform ist die Stirnfläche zwischen 5% und 100% größer als die Grundfläche, besonders bevorzugt zwischen 10% und 50% der Grundfläche.

In einer bevorzugten Ausführungsform beträgt der Abstand zwischen zwei Vorsprüngen weniger als 2 mm, insbesondere weniger als 1 mm.

In einer weiteren bevorzugten Ausführungsform der Erfindung sind die verschiedenen Arten von Vorsprüngen gemischt angeordnet, besonders bevorzugt so, dass auf der strukturierten Oberfläche keine 10, 5, 4, 3, 2 oder 1 Vorsprünge, bzw. Vorsprung, einer Art nur mit Vorsprüngen der gleichen Art umgeben sind, bzw. ist. Insbesondere ist jeder Vorsprung einer Art immer von mindestens einem Vorsprung einer anderen Art umgeben. Dabei werden bevorzugt für einen Vorsprung alle Vorsprünge als umgebend angesehen, zu deren geometrischen Schwerpunkt der Grundfläche eine Gerade vom geometrischen Schwerpunkt der Grundfläche des betrachteten Vorsprungs gezogen werden kann, welche keine Grundfläche eines anderen Vorsprungs schneidet.

Die mindestens zwei Arten von Vorsprüngen unterscheiden sich mindestens in ihrer senkrechten Höhe der Stirnfläche. Jede Art von Vorsprüngen mit der gleichen senkrechten Höhe spannt daher eine in dieser senkrechten Höhe eine Kontaktfläche auf. Bei Kontaktierung mit einem Substrat treten diese Kontaktflächen abhängig von der Belastung nacheinander in Kontakt mit dem Substrat. Bevorzugt sind die jeweilig aufgespannten Kontaktflächen parallel zu der Oberfläche auf der die Vorsprünge angeordnet sind. Besonders bevorzugt sind die Vorsprünge so angeordnet, dass bei Kontaktierung mit einem Substrat alle Vorsprünge einer senkrechten Höhe in diesem Bereich das Substrat kontaktieren. Die möglichen Unterschiede in der senkrechten Höhe der Vorsprünge sind vor allem vom gewählten Aspektverhältnis und des Elastizitätsmoduls der Vorsprünge abhängig. Die Vorsprünge müssen sich ohne Abknicken der Stirnflächen mindestens bis zur Kontaktierung mit der Art von Vorsprüngen einer zweiten senkrechten Höhe ohne Abknicken der Stirnflächen komprimieren lassen.

Bevorzugt sind die Unterschiede in der Höhe so gewählt, dass sie durch Kompression der Vorsprünge in einem Bereich des elastischen Verhaltens der Vorsprünge erfolgt. Dieses kann durch einfache Messungen bestimmt werden. Wird dieser Bereich überschritten, kommt es in der Regel zur irreversiblen plastischen Verformung der Vorsprünge, beispielsweise durch Verbiegen. Da die Elastizität des Materials begrenzt ist, führt diese Verformung auch dazu, dass die Stirnflächen, welche in Kontakt zu einem Substrat stehen, sich relativ zum Substrat irreversibel neu ausrichten. Im Extremfall wird die Stirnfläche sogar teilweise vom Substrat abgelöst. Dies kann für irreversible einmalige Schaltvorgänge genutzt werden.

In einer weiteren Ausführungsform sind die Unterschiede in der Höhe so gewählt, dass mindestens die Art von Vorsprüngen mit der höchsten senkrechten Höhe ohne Abknicken der Vorsprünge mindestens bis zur Kontaktierung der Art von Vorsprüngen mit der nächstniedrigeren senkrechten Höhe komprimiert werden können, bevorzugt mindestens bis zur Kontaktierung der Art von Vorsprüngen mit der niedrigsten senkrechten Höhe.

In einer bevorzugten Ausführungsform der Erfindung werden vor allem die Vorsprünge verformt und nicht die Oberfläche auf der die Vorsprünge angeordnet sind.

In einer weiteren Ausführungsform der Erfindung liegt der Elastizitätsmodul der Vorsprünge zwischen 10 kPa und 10 GPa.

In einer bevorzugten Ausführungsform liegt der Höhenunterschied zwischen der Art von Vorsprüngen mit der höchsten senkrechten Höhe und der Art von Vorsprüngen mit der geringsten senkrechten Höhe zwischen 1 % bis 30 % der geringsten senkrechten Höhe, bevorzugt zwischen 2 % und 20 %.

Die Erfindung betrifft außerdem ein Verfahren zur Oberflächenmodifizierung eines Objekts, um eine Oberfläche mit schaltbarer Adhäsion zu erhalten, wobei die Oberfläche einer Strukturierung unterzogen wird, so dass eine Vielzahl von Vorsprüngen gebildet werden, die mindestens jeweils einen Stamm aufweisen, wobei der Stamm eine von der Oberfläche wegweisende Stirnfläche besitzt, wobei die Vielzahl von Vorsprüngen mindestens zwei Arten von Vorsprüngen umfasst, welche sich mindestens in der senkrechten Höhe der Stirnfläche zur Oberfläche unterscheiden; und das Material der Vorsprünge einen solchen Elastizitätsmodul aufweist, dass abhängig von der Belastung eine oder mehrere Arten der Vorsprünge über ihre Stirnflächen eine Adhäsionskraft ausbilden, welche höher ist als die durch die eventuelle Kompression der Vorsprünge ausgeübte Kraft; und mindestens eine Art der Vorsprünge ein solches Aspektverhältnis aufweist, dass bei dem Überschreiten einer bestimmten Belastung diese Vorsprünge abknicken und die Adhäsionskraft durch Abknicken der Stirnflächen stark abnimmt.

Die Erfindung betrifft außerdem ein Verfahren zur Herstellung einer erfindungsgemäßen strukturierten Oberfläche mit mindestens zwei Arten von Vorsprüngen, welche sind mindestens in ihrer senkrechten Höhe unterscheiden.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Dazu wird in einem ersten Schritt eine strukturierte Oberfläche bereitgestellt, welche mindestens eine Art von Vorsprüngen umfasst. Auf die Stirnflächen mindestens eines Teils der Vorsprünge wird ein härtbares Material aufgetragen. Wenn die strukturierte Oberfläche Vorsprünge mit der gleichen senkrechten Höhe aufweist, wird das Material nur auf einen Teil der Stirnflächen der Vorsprünge aufgetragen, um nach dem Verfahren auch zwei Arten von Vorsprüngen zu erhalten.

Bevorzugt wird ein flüssiges oder viskoses härtbares Material aufgetragen, insbesondere derart, dass es auf der Stirnfläche mindestens einen Tropfen bildet.

Bevorzugt wird das Material so aufgetragen, dass die höchste senkrechte Höhe der behandelten Vorsprünge höher ist, als die höchste senkrechte Höhe der Vorsprünge der strukturierten Oberfläche vor dem Auftragen. Bevorzugt werden Vorsprünge mit der nicht niedrigsten senkrechten Höhe behandelt, bevorzugt die Art der Vorsprünge mit der höchsten senkrechten Höhe.

Die so behandelten Vorsprünge werden nun so mit einer Vorlage für die Stirnfläche in Kontakt gebracht, dass aus dem härtbaren Material die spätere Stirnfläche der erhöhten Vorsprünge ausgebildet wird.

Diese Kontaktierung kann auch zu einer Verbreiterung der Stirnflächen in Bezug auf die bisherigen Vorsprünge führen.

Die Vorlage kann beschichtet sein, so dass das härtbare Material nicht anhaftet, beispielswiese durch Silanisierung.

Die Vorlage kann eine beliebige Form aufweisen. In der einfachsten Variante ist es eine ebene Fläche, was zu erhöhten Vorsprüngen mit ebenen Stirnflächen führt. Die Vorlage kann aber auch strukturiert sein, um der erzeugten Stirnfläche eine Struktur zu geben.

In einem nächsten Schritt wird das härtbare Material gehärtet. Die verwendete Methode ist abhängig von dem verwendeten Material. Es kann sich beispielsweise um Härtung durch Strahlung und/oder Wärme handeln. Bevorzugt ist es eine Aushärtung durch Wärme, bevorzugt durch Verwendung einer erwärmten Vorlage. Die Vorlage kann dabei schon bei der Kontaktierung erwärmt sein.

Im letzten Schritt wird die strukturierte Oberfläche, welche nun mindestens zwei Arten von Vorsprüngen, welche sich mindestens in ihrer senkrechten Höhe unterscheiden, aufweist, von der Vorlage abgelöst.

Das härtbare Material kann jedes geeignete Material sein. Beispielsweise geeignet sind polymerisierbare und/oder härtbare Verbindungen, wie Monomere von Polymeren, Silane, Silikone.

Das Verfahren kann auch mehrfach durchgeführt werden, um weitere Arten von Vorsprüngen mit einer bestimmten senkrechten Höhe zu erzeugen.

Die erfindungsgemäß strukturierte Oberfläche kann auch auf andere Weise erhalten werden. Möglich sind beispielsweise zweistufige Photolithographie, 2-Photonenlithographie, Abformung von entsprechenden Matrizen, Ätzverfahren, Fräsverfahren oder 3D-Druck.

Die Erfindung betrifft außerdem einen Verbund aus zwei Körpern, wobei die Schnittstelle eine erfindungsgemäße strukturierte Oberfläche aufweist.

Die Erfindung betrifft außerdem ein Verfahren zum Schalten der Adhäsion einer Oberfläche. Dazu wird eine erfindungsgemäß strukturierte Oberfläche in Kontakt mit einem Substrat gebracht, wobei abhängig von der auf die strukturierte Oberfläche ausgeübten Kraft folgende Fälle unterschieden werden können.

Kontaktierung der Art von Vorsprüngen mit der höchsten senkrechten Höhe und Ausbildung einer geringen Adhäsionskraft. Die Adhäsion kommt nur über die Stirnflächen dieser Vorsprünge zu Stande.

Erhöhung der Kraft unter Kompression der bereits kontaktierten Vorsprünge bis zur Kontaktierung der Vorsprünge mit der nächstgeringeren senkrechten Höhe und Ausbildung einer im Vergleich zum vorherigen Zustand höheren Adhäsionskraft. Die Adhäsionskraft erhöht sich durch die zusätzliche Kontaktierung der neuen Stirnflächen der nun auch in Kontakt mit dem Substrat tretenden Stirnflächen. Allerdings ist die ausgebildete Adhäsionskraft verringert um die durch Kompression der höheren Vorsprünge in diesen gespeicherte elastische Energie. Wenn mehr als zwei Arten an Vorsprüngen vorhanden sind, kann dieser Schritt unter Erhöhung der ausgeübten Kraft wiederholt werden, bis die Stirnflächen aller Vorsprünge in Kontakt mit dem Substrat getreten sind. Mit jeder Art von Vorsprüngen, welche in Kontakt mit dem Substrat treten, wird eine bestimmte Adhäsionskraft ausgebildet. Wenn alle Vorsprünge in Kontakt getreten sind, hat die strukturierte Oberfläche ihre maximale Adhäsion erreicht. Die Anzahl der Arten an Vorsprüngen mit verschiedener senkrechter Höhe bestimmt daher die Anzahl an möglichen schaltbaren Zuständen der strukturierten Oberfläche.

Es ist daher wichtig, dass die durch die Vergrößerung der Kontaktfläche durch die Kontaktierung durch jede weitere Art von Vorsprüngen immer größer ist, als die durch die Kompression aufzuwendende Energie. Daher sind Vorsprünge mit verbreiterten Stirnflächen bevorzugt, da dort vor allem der schmalere Stamm komprimiert wird.

Wird die Kraft über einen bestimmten Wert, abhängig von dem Material und der Struktur der strukturierten Oberfläche, erhöht, kommt es zum bevorzugt reversiblen Umknicken mindestens eines Teils der Vorsprünge. Dadurch verliert mindestens ein Teil der Stirnflächen den Kontakt zum Substrat. Die für die Adhäsion zur Verfügung stehende Fläche reduziert sich und die Adhäsion der strukturierten Oberfläche nimmt ab. Im Idealfall kann die strukturierte Oberfläche nun ohne Adhäsion abgelöst werden.

Die erfindungsgemäß strukturierte Oberfläche erlaubt daher das Umschalten zwischen mindestens drei Zuständen der Adhäsion. Dabei ist es überraschend, dass eine Verstärkung der Kraft zur Abnahme der Adhäsion führen kann.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1 eine schematische Darstellung des erfindungsgemäßen Verfahrens;

Fig. 2 Schematische Darstellung des Verfahrens zur Herstellung eines Substrats mit Vorsprüngen mit verbreiterten Stirnflächen;

Fig. 3 Schematische Darstellung des erfindungsgemäßen Verfahrens zur Herstellung von Substraten mit mindestens zwei unterschiedlich hohen Vorsprüngen;

Fig. 4 Schematische Darstellung der Probe 105;

Fig. 5 Schematische Darstellung verschiedener Ausführungsformen von erfindungsgemäßen Vorsprüngen;

Fig. 6 a) Schematische Darstellung einer Probe 105 mit den in der Anmeldung angegebenen Größenangaben; in b) ist die Anordnung der Vorsprünge bei einer Probe gezeigt;

Fig. 7 Fotografie einer in PDMS ausgeformten Probe vor der Verbreiterung der Stirnflächen;

Fig. 8 Seitenansicht einer Probe mit verbreiterten Stirnflächen und zwei Arten von Vorsprüngen (SP, LP);

Fig. 9 Diagramme relativer Verschiebung in Bezug auf die Kraft (a)); b) zeigt einen vergrößerten Ausschnitt aus der Abbildung a); Zur besseren Übersicht wurden die Kurven entlang der X-Achse (relative Verschiebung) gegeneinander verschoben. Üblicherweise erfolgt der Anstieg der Kraft für eine Probe bei der gleichen Verschiebung für die Verschiebung;

Fig. 10 Zuordnung der verschiedenen Punkte eines Kraft/Verschiebungsdiagramms zu fotografischen Aufnahmen der Probe;

Fig. 11 Gemessene Adhäsionskräfte für eine Probe mit AR 4,0 bei unterschiedlichen Geschwindigkeiten (20 $\mu$m/s; 60 $\mu$m/s); Die Proben entsprechen den Messungen mit geringer Vorbelastung (A), mittlerer Vorbelastung (B) und hoher Vorbelastung (C);

Fig. 12 Gemessene Adhäsionskräfte für eine Probe mit AR 4,5 bei unterschiedlichen Geschwindigkeiten (20 $\mu$m/s; 60 $\mu$m/s); Die Proben entsprechen den Messungen mit geringer Vorbelastung (A), mittlerer Vorbelastung (B) und hoher Vorbelastung (C);

Fig. 13    Gemessene Adhäsionskräfte für eine Probe mit AR 5,0 bei unterschiedlichen Geschwindigkeiten (20 μm/s; 60 μm/s); Die Proben entsprechen den Messungen mit geringer Vorbelastung (A), mittlerer Vorbelastung (B) und hoher Vorbelastung (C);

Fig. 14    Abzugskraft im Verhältnis zur Vorbelastung einer Probe mit AR 4,0 bei einer Geschwindigkeit von 20 μm/s;

Fig. 15    Abzugskraft im Verhältnis zur Vorbelastung einer Probe mit AR 4,0 bei einer Geschwindigkeit von 60 μm/s;

Fig. 16    Abzugskraft im Verhältnis zur Vorbelastung einer Probe mit AR 4,5 bei einer Geschwindigkeit von 20 μm/s;

Fig. 17    Abzugskraft im Verhältnis zur Vorbelastung einer Probe mit AR 4,5 bei einer Geschwindigkeit von 60 μm/s;

Fig. 18    Abzugskraft im Verhältnis zur Vorbelastung einer Probe mit AR 5,0 bei einer Geschwindigkeit von 20 μm/s;

Fig. 19    Abzugskraft im Verhältnis zur Vorbelastung einer Probe mit AR 5,0 bei einer Geschwindigkeit von 60 μm/s;

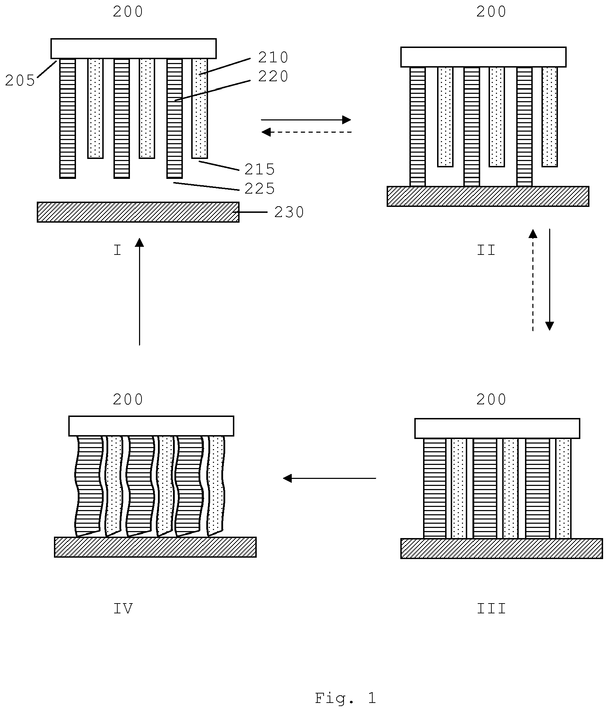

Figur 1 zeigt eine schematische Darstellung der schaltbaren Adhäsion mit einer erfindungsgemäß strukturierten Oberfläche. Die strukturierte Oberfläche 200 umfasst eine erste Art von Vorsprüngen 210 und mindestens eine zweite Art von Vorsprüngen 220, welche sich in ihrer senkrechten Höhe ihrer Stirnflächen 215, 225 unterscheiden. Die senkrechte Höhe ist dabei der Abstand der Stirnflächen 215, 225 von der Oberfläche 205 auf der die Vorsprünge angeordnet sind. Die Vorsprünge weisen einen Stamm 210, 220 und eine Stirnfläche 215, 225 auf. Dieses Substrat wird in Schritt I auf ein Substrat 230 hin bewegt. Dabei kommen, wie in II gezeigt, zunächst die Vorsprünge mit der größten senkrechten Höhe mit der Substratoberfläche in Kontakt. Die Stirnflächen 225 dieser Vorsprünge 220 bewirken daher eine Adhäsion der strukturierten Oberfläche 200 an dem Substrat 230. Diese Kraft muss überwunden werden, um die strukturierte Oberfläche wieder abzulösen (dies zeigt der gestrichelte Pfeil). Dies ist die Situation mit einer geringen Vorbelastung. Wenn die strukturierte Oberfläche 200 weiter auf das Substrat 230 zubewegt wird, kommt es zur Kompression der bereit mit dem Substrat in Kontakt befindlichen Vorsprünge 220. Ab einer bestimmten Kompression bzw. Vorbelastung kommen auch die Stirnflächen 215 der zweiten Art von Vorsprüngen 210 mit dem Substrat in Kontakt (Schritt III). Damit ist die für die Adhäsion zur Verfügung stehende Oberfläche auf einmal stark vergrößert. Entsprechend erhöht sich die für das Ablösen erforderliche Kraft (gezeigt als gestrichelter Pfeil, wobei die Ablösung der Vorsprünge nicht immer über II verlaufen muss). Wird die Vorbelastung weiter erhöht (Abbildung IV), so kommt es aufgrund des Aspektverhältnisses der Vorsprünge zum Abknicken der Vorsprünge. Es müssen nicht alle Vorsprünge gleichmäßig abknicken. Entscheidend ist, dass dadurch die Stirnfläche und damit die für die Adhäsion zur Verfügung stehende Fläche sich von dem Substrat 230 ablöst. Dadurch sinkt schlagartig die für die Ablösung erforderliche Kraft und das Substrat ist einfach von der Oberfläche abzulösen.

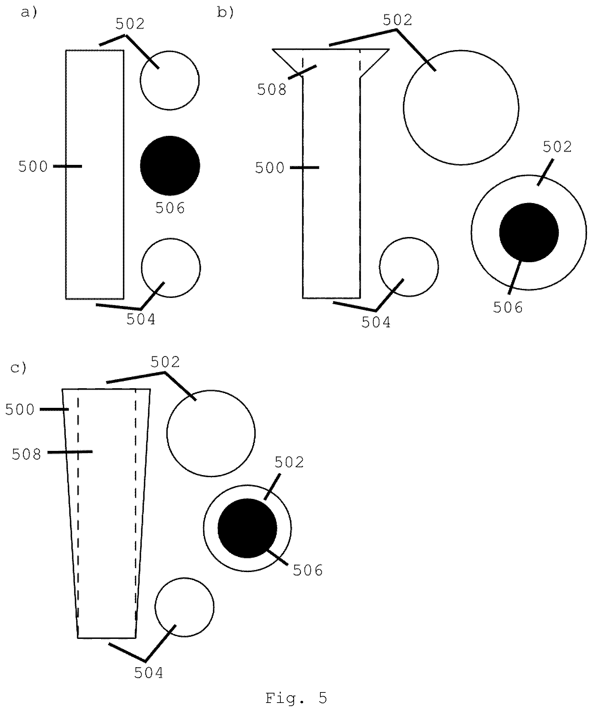

Figur 5 zeigt eine schematische Darstellung von bevorzugten Ausführungsformen eines erfindungsgemäßen Vorsprungs. Ein Vorsprung 500 umfasst eine Stirnfläche 502 und eine Grundfläche 504. Die Stirnfläche 502 und Grundfläche 504 sind in Seitenansicht (links) und Draufsicht (rechts) gezeigt. Die schwarze Fläche 506 zeigt den überlappenden Bereich einer senkrechten Projektion der Stirnfläche 502 auf die Grundfläche 504. Er kann mit den Flächen identisch sein (a)) oder im Falle einer verbreiterten Stirnfläche (b) und c)) innerhalb der Stirnfläche 502 liegen. Der durch die Projektion des Überlappungsbereichs 506 auf die Stirnfläche aufgespannte Körper 508 ist gestrichelt dargestellt. Er liegt bei allen Vorsprüngen innerhalb des Vorsprungs, wobei er im Fall a) mit dem Vorsprung selbst identisch ist. Innerhalb schließt daher auch gemeinsame Außenflächen mit ein.

Experimente

1. Herstellung der Proben

Gießvorlagen für die Proben wurden durch Ausfräsen mehrerer makroskopischer Säulenanordnungen aus Aluminium hergestellt. Dazu wurden in einer ausgefrästen Vertiefung von 3 mm Tiefe hexagonal angeordnete runde Löcher mit einem Durchmesser von 400 μm gefräst. Die Löcher ergeben nach der Ausformung entsprechende Säulen. Drei unterschiedliche Vorlagen wurden hergestellt, eine zentrale Säule, eine zentrale Säule umgeben von 6 weiteren Säule, und eine zentrale Säule umgeben von zwei Ringen aus insgesamt 19 Säulen. Die Löcher für die Säulen waren 1600 μm, 1800 μm und 2000 μm tief. Dies führt zu Säulen mit einem Aspektverhältnis (AR aspect ratio, Höhe: Durchmesser) von 4,0, 4,5 und 5. Der Abstand der Löcher von Zentrum zu Zentrum war 800 μm für alle Vorlagen. Nach dem Fräsprozess wurden die Vorlagen mit Isopropanol gereinigt und eventuelle Reste des Fräsvorgangs durch mehrfaches Ausformen entfernt.

Die Proben wurden aus Polydimethylsiloxan (PDMS, Sylgard 184, Dow Corning) mit einem Verhältnis von 10:1 Prepolymer und Vernetzer hergestellt. Alle Proben wurden erstellt, indem die Vorlage mit PDMS mit dem vermischten PDMS gefüllt wurde. Danach wurde in einem Exsikkator entgast bis keine Blasen mehr zu sehen waren. Die Proben wurden für 2 Stunden bei 75 °C gehärtet.

## 2. Herstellung der verbreiterten Stirnflächen

Die verbreiterten Stirnflächen (auch "mushroom tips") wurden mit einer selbst entworfenen Vorrichtung hergestellt. Diese erlaubt eine präzise Steuerung der Probe zum Eintauchen und Anpressen.

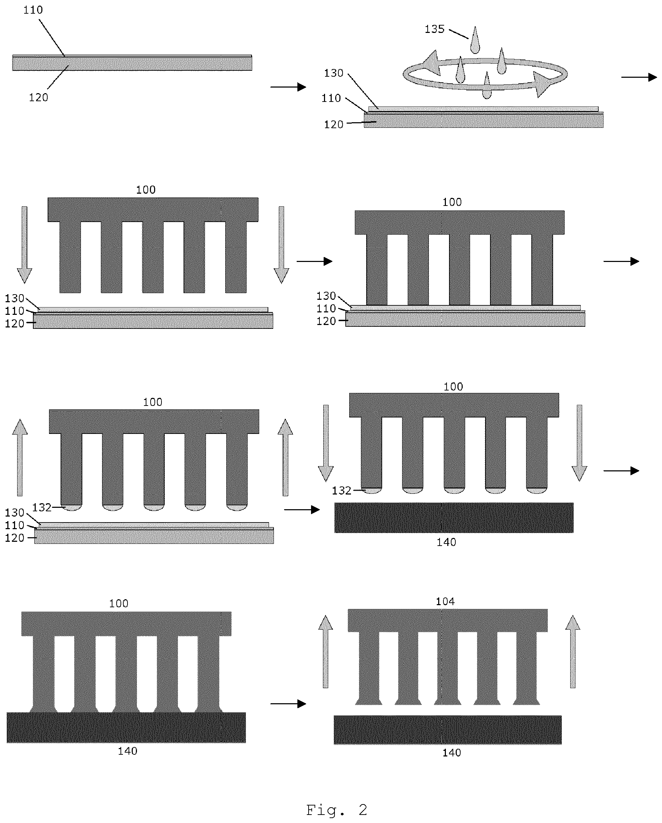

Das Verfahren ist in Figur 2 dargestellt. In einem ersten Schritt wird ein Substrat 120 silanisiert. Dazu wurde das Substrat zusammen mit einem Gefäß mit 1 μL Trichloro(1H, 1H, 2H, 2H-perfluorooktyl)silan in einem Exsikkator gestellt und so lange unter Vakuum gesetzt, bis das Silan vollständig verdampft war. Das Substrat wurde danach für 30 Minuten bei 95 °C in einem Ofen behandelt. Es wurde ein Substrat 120 mit einer Silanschicht 110 erhalten.

Im nächsten Schritt wurde das Prepolymer und der Vernetzer für PDMS im Verhältnis von 10:1 gemischt (Gewichtsverhältnis) und Gasblasen im Exsikkator entfernt. Danach wurden 0,5 mL des entgasten PDMS 135 in der Mitte des Substrates mit 35 mm Durchmesser platziert und das Substrat mit 300 rpm bei einer Beschleunigung von 5000 rpm/s für 300s rotiert. Man erhielt eine 0,5 mm dicke Schicht 130 aus flüssigem PDMS.

In diese Schicht 130 wurden die Stirnflächen der in 1. hergestellten Proben 100 eingetaucht. Dadurch wurde eine Probe 100 erhalten, welche an den Stirnflächen Tropfen aus PDMS 132 aufwies.

Diese Probe 100 wurde im nächsten Schritt für 10 Minuten gegen ein silanisiertes Glassubstrat 140 gedrückt, welches auf 100 °C erhitzt wurde. Dadurch wurden Proben 104 mit verbreiterten Stirnflächen erhalten.

## 3. Herstellung der Proben mit zwei Arten von Vorsprüngen

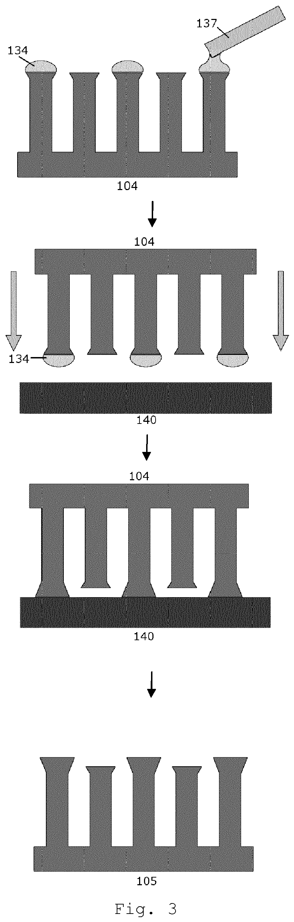

Das Verfahren ist in Figur 3 dargestellt.

In einem ersten Schritt werden auf bestimmte Stirnflächen einer Probe 104 Tropfen von PDMS 134 aufgetragen. Dies kann über eine Pipette oder ein sonstiges Hilfsmittel 137 erfolgen. Die Probe 104 wird dann mit den Tropfen 134 für 10 Minuten gegen ein silanisiertes Glassubstrat 140 gedrückt, welches auf 100 °C geheizt wurde. Dadurch bilden sich an den behandelten Stirnflächen kegelförmige Verbreiterungen. Die behandelten Vorsprünge verlängern sich gleichzeitig etwas. Die erhaltene Probe 105 weist daher zwei Arten von Vorsprüngen auf, welche sich in der Höhe unterscheiden. Alle Vorsprünge der Probe 105 weisen verbreiterte Stirnflächen auf ("mushroom tip").

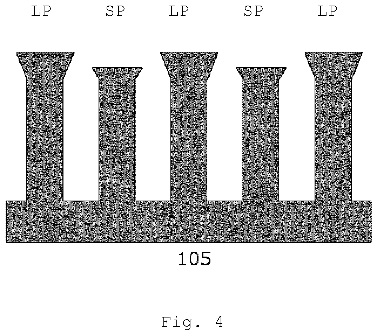

Figur 4 zeigt eine schematische Darstellung der Probe 105.

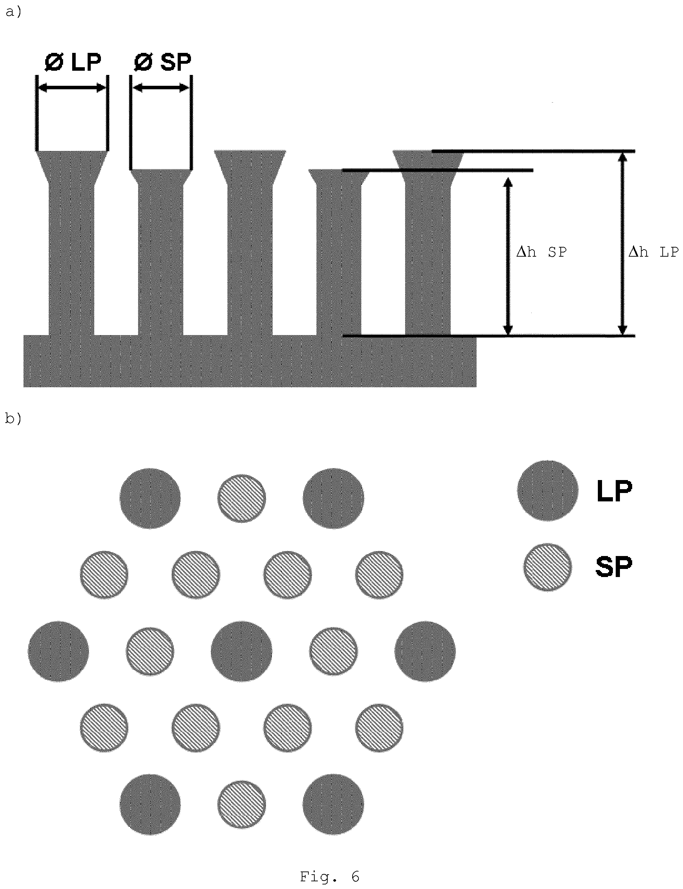

Figur 6 zeigt in a) eine schematische Darstellung einer Probe mit zwei Arten von Vorsprüngen. Dabei steht LP für höhere und SP für niedrigere Vorsprünge. Die Maßangaben geben an, wo die in Tabelle 1 angegebenen Daten für Durchmesser und Höhe gemessen wurden. Die Ansicht b) zeigt die Anordnung der Vorsprünge in einer Probe. Die Probe umfasste demnach 7 LP und 12 SP Vorsprünge. Jede Art an Vorsprüngen spannt eine mögliche Kontaktfläche auf. Durch die Verbreiterung der Stirnflächen konnte der Durchmesser der Stirnflächen deutlich vergrößert werden. Im Prinzip spannen die Stirnflächen der höheren Vorsprünge (LP) eine erste Kontaktfläche in der senkrechten Höhe $\Delta h$ LP auf. Die Stirnflächen der niedrigeren Vorsprünge (SP) spannen eine zweite Kontaktfläche in der senkrechten Höhe $\Delta h$ SP auf. Beide Kontaktflächen sind zueinander parallel und auch parallel zu der Oberfläche auf der die Vorsprünge angeordnet sind.

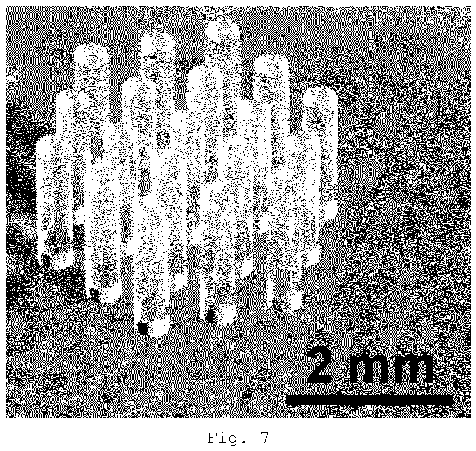

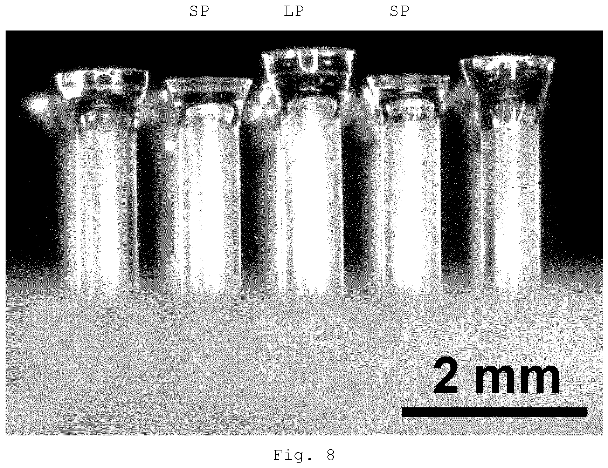

Figur 7 zeigt eine Fotographie einer Probe nach der Ausformung aus PDMS ohne verbreiterte Stirnflächen. In Figur 8 ist eine vollständig behandelte Probe aus Figur 7 mit verbreiterten Stirnflächen und zwei Arten von Vorsprüngen (SP und LP) entsprechend Figur 6 gezeigt. Die Höhe der Vorsprünge wurde mit einem optischen Mikroskop (Keyence VHX-2000D mit einer VH-Z20R/W-Linse) bestimmt. In der Tabelle 1 sind die gemessenen Werte angegeben.

## 4. Adhäsionsmessungen

Die Messungen wurden mit einer Apparatur gemäß Kroner, E.; Blau, J.; Arzt E. An adhesion measurement setup for bioinspired fibrillar surfaces using flat probes. Review of Scientific Instruments 2012, 83 gemessen. Die PDMS-Probe wurde dabei auf einen Glasträger aufgebracht und in einem mit hoher Präzision verschiebbaren und kippbaren Probenhalter befestigt. Die Kräfte wurden durch Messung der Biegung eines metallischen Cantilever mit einer Federkonstante von 2524 N/m mittels Laserinterferometrie bestimmt. Der Cantilever hatte einen glatten, flachen und ausgerichteten Glasprüfkörper (Substrat). Für die Messung wurde die Probe mit einer bestimmten Geschwindigkeit auf das Substrat zubewegt. Nach Kontakt wurde eine vorbestimmte (positive) Vorbelastung (preload) eingestellt. Danach wurde die Probe wieder von dem Substrat weg bewegt. Dabei wurde die (negative) Abzugskraft gemessen. Die Versuche wurden mit Probengeschwindigkeiten von 20 μm/s und 60 μm/s durchgeführt. Die Vorbelastung wurde so eingestellt, dass aussagekräftige, von der Vorbelastung abhängige, Abzugskräfte gemessen wurden. Alle Messungen wurden mit einer optischen Kamera überwacht. Alle Proben wurden bei drei verschiedenen Drehwinkeln (0°, 120° und 240 °), bezogen auf die Drehachse senkrecht zum Substrat, gemessen. Dadurch sollten Effekte aufgrund fehlerhafter Ausrichtung der Proben in Bezug auf das Substrat minimiert werden.

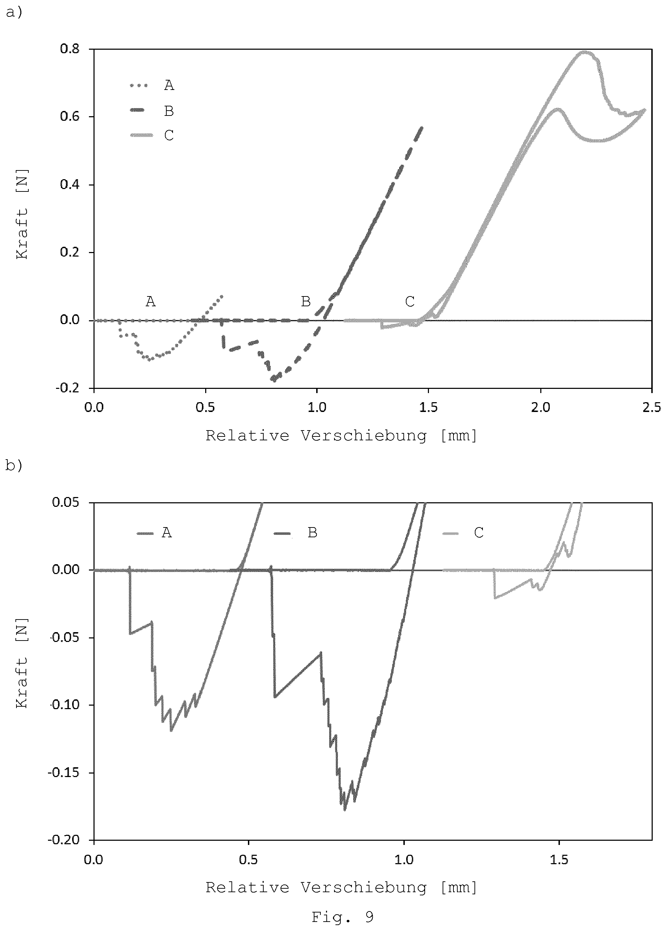

Die Messung wurde für alle Proben mit der vorstehend genannten Vorrichtung durchgeführt. Figur 9 zeigt Kraft-Verschiebungskurven für drei exemplarische Messungen

mit geringer (A), mittlerer (B) und hoher Vorbelastung. Die Proben wurden bis zum Kontakt auf das Substrat hinbewegt. Danach wurde die Probe weiter auf das Substrat hinbewegt. Das Maximum der Druckbelastung wird als Vorbelastung für die jeweilige Messung definiert. Danach wurde die Probe wieder von dem Substrat wegbewegt. Die maximal gemessene Kraft wird als Abzugskraft angesehen. Figur 9 b) zeigt den Bereich der Zugbeanspruchung der Figur 9 a) vergrößert. Die gepunktete/durchgezogene Linie (A) zeigt die Messung bei geringer Vorbelastung. Diese Messung zeigt einen Verlauf typisch für strukturierte Proben. Es zeigt einen gleichmäßigen Verlauf in dem Bereich der Kompression (in der Bewegung zum Substrat hin) und einen sägezahnähnlichen Verlauf im Bereich der Zugbeanspruchung (Bewegung vom Substrat weg). Zusammen mit der optischen Beobachtung konnten die einzelnen Minima der Ablösung der einzelnen Vorsprünge (LP) zugeordnet werden. Im Fall von Figur 9 sind es 7 Ablösungen. Die Vorbelastung war nicht hoch genug, um auch die zweite Art an Vorsprüngen (SP) mit dem Substrat zu kontaktieren.

Die gestrichelte/durchgezogene Linie (B) zeigt eine Messung mit mittlerer Vorbelastung. Die Probe hat zunächst nur mit den höheren Vorsprüngen (LP) Kontakt. Die Kurve zeigt in diesem Bereich den gleichen Verlauf, wie bei geringer Vorbelastung. Dann bei einer Kraft von ca. 0,08 N nimmt die Steigung der Kurve plötzlich zu. Die optische Beobachtung zeigt, dass bei dieser Kraft die kürzeren Vorsprünge (SP) das Substrat erreichen. Dies bedeutet, dass die längeren Vorsprünge (LP) da entsprechend stark zusammengedrückt sind. Die Vorbelastung wurde noch etwas erhöht und die Probe dann wieder von dem Substrat wegbewegt. Es zeigt sich, dass im Bereich der Zugbelastung eine deutlich höhere Abzugskraft gemessen wurde. Außerdem konnten 19 Minima den einzelnen Vorsprüngen zugeordnet werden. Die optische Beobachtung zeigte, dass sich zunächst die kürzeren Vorsprünge (SP) ablösen und danach die längeren Vorsprünge (LP).

Die dritte Kurve (C) zeigt die Messung bei hoher Vorbelastung und zeigt einen deutlich anderen Verlauf. Bei geringer Belastung folgt die Kurve dem Verlauf der mittleren Vorbelastung, d.h. zunächst geringe Steigung und Anstieg der Steigung durch Kontaktierung der kürzeren Vorsprünge (SP). Bei einer bestimmten kritischen Belastung (hier ca. 0,8 N) ist die maximale Vorbelastung erreicht. Weitere Verschiebung führt zu einer Abnahme der Belastung. Die optische Beobachtung zeigt, dass dies auf ein reversibles Abknicken der Vorsprünge zurückzuführen ist. Während der Abnahme der Belastung zeigt die Kurve eine deutliche Hysterese. Die optische Beobachtung zeigt, dass die Vorsprünge zunächst ihre ursprüngliche gerade Form annehmen. Wenn die Last weiter verringert wird und eine Zuglast angelegt wird, löst sich die Probe sofort von dem Substrat, in einigen Fällen sogar schon vor Erreichen der Ausgangsposition. Die Anzahl der Minima in der Kurve ist viel geringer und die Minima wirken verschmiert. Die resultierende Abzugskraft ist sehr gering.

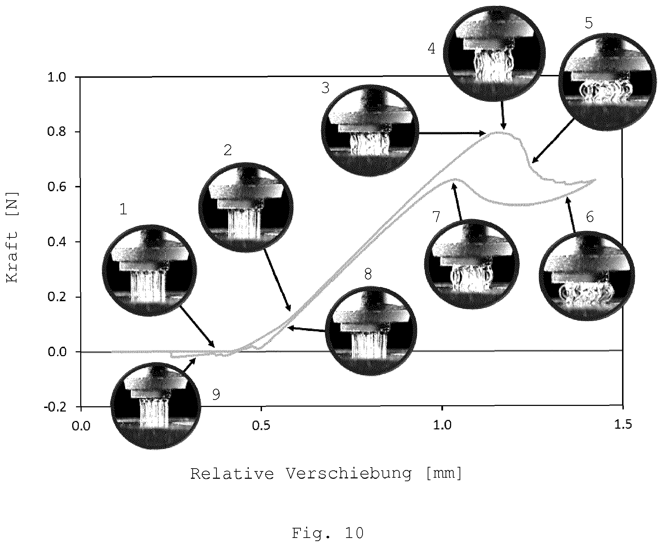

Die Figur 10 zeigt eine Messung mit hoher Vorbelastung mit zugehörigen Abbildungen der Probe in den verschiedenen Phasen der Messung. Unter 1 wird die Probe auf die Oberfläche zubewegt. Es kommt zum Kontakt und die Kraft steigt an. Bei 2 steigt die Steigung der Kurve an, da auch die kürzeren Vorsprünge in Kontakt mit dem Substrat kommen. Bei 3 ist die maximale Vorbelastung erreicht und die Vorsprünge beginnen zu knicken und nachzugeben. Dies führt zu einer Abnahme der Kraft 5. Auch in der Rückwärtsbewegung 6 nimmt die Kraft zunächst ab, um dann wieder anzusteigen 7, wenn die Vorsprünge wieder die gerade Form annehmen. Bei 8 nimmt die Kraft weiter ab, ehe sich die Probe ohne starke Adhäsion 9 von dem Substrat löst.

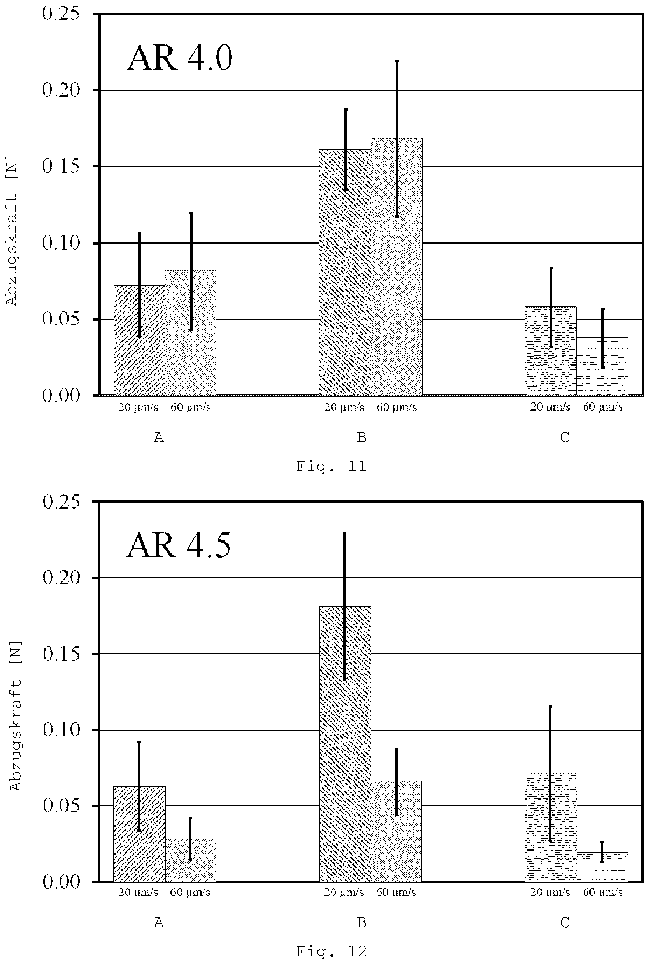

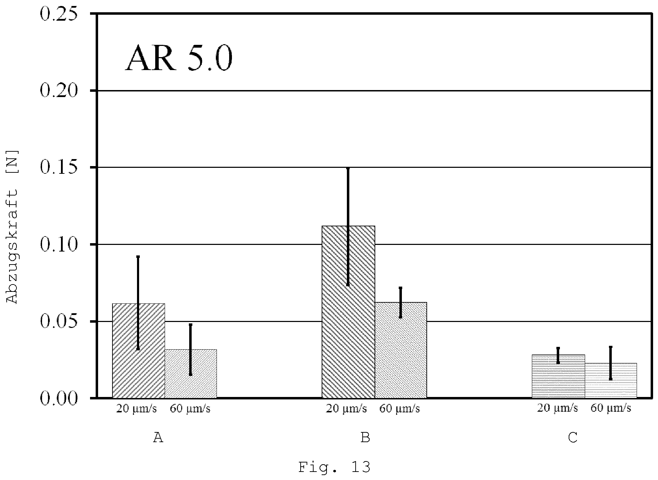

Die Figuren 11-13 fassen alle Adhäsionsexperimente für drei verschiedene Aspektverhältnisse (AR) (AR 4,0, AR 4,5, AR 5,0) bei der Geschwindigkeit von 20 $\mu$m/s und 60 $\mu$m/s zusammen. Die Proben entsprechen den Messungen mit geringer Vorbelastung (A), mittlerer Vorbelastung (B) und hoher Vorbelastung (C).

Aus den Experimenten lassen sich folgende Schlüsse ziehen.

- Für jedes der getesteten Aspektverhältnisse konnten die drei Arten der Adhäsionssteuerung abhängig von der Vorbelastung (A, B, C) detektiert werden. Geringe Vorbelastung führt zu geringer Abzugskraft, mittlere Vorbelastung zu hoher Abzugskraft und hohe Vorbelastung zu sehr geringer Abzugskraft. Auch wenn in einigen wenigen Fällen die Abzugskraft von A ähnlich zu C ist, so ist der generelle Trend eindeutig zu erkennen.
- Je schneller die Bewegung der Probe während der Messung ist, desto geringer ist die Abzugskraft. Für die Probe mit AR 4,0 ist die Abzugskraft ähnlich. Für die anderen Proben mit AR 4,5 und 5,0 gibt es deutliche Unterschiede.
- Mit zunehmendem Aspektverhältnis nimmt die Abzugskraft ab. Die Probe mit AR 4,0 zeigt die höchste Adhäsion, während die Probe mit AR 5,0 deutlich geringere Haftung aufweist.

Die einzelnen Arten der Adhäsion für die erfindungsgemäßen Proben kann dabei wie folgt beschrieben werden.

Bei geringer Vorbelastung treten nur die längsten Vorsprünge in Kontakt mit dem Substrat. Die Adhäsion der Probe hängt daher im Prinzip von der Anzahl der langen Vorsprünge ab. Dadurch steht mehr Stirnfläche für die Adhäsion bei geringer Vorbelastung zu Verfügung.

Bei mittlerer Vorbelastung führt die Last zu einer Kompression der längeren Vorsprünge, bis auch die kürzeren Vorsprünge in Kontakt mit der Oberfläche kommen. Dies führt zu einem plötzlichen Anstieg der Anzahl an Vorsprüngen, welche mit dem Substrat in Kontakt sind. Dies hat im Wesentlichen zwei Effekte. Zum einen nimmt die effektive Steifheit der Probe zu. Dies zeigt sich an dem Anstieg der Steigung der Kraft/Verschiebungskurve. Zum anderen nimmt die Kontaktfläche der Probe plötzlich zu. Dies führt zu einer deutlichen Zunahme der Abzugskraft und der Adhäsionsarbeit.

Im Unterschied zu der Adhäsion bei geringer Vorbelastung wird erwartet, dass die Abzugskraft für mittlere Vorbelastung unter anderem von der Anzahl der Arten an Vorsprüngen, welche an der Kontaktierung beteiligt sind, der Höhendifferenz zwischen den Arten an Vorsprüngen und dem Aspektverhältnis abhängt.

Wenn die Vorbelastung einen bestimmten Wert überschreitet, beginnen die Vorsprünge sich zu verbiegen und zu knicken. Dies ist bevorzugt reversibel.

Das Verbiegen wirkt sich auch auf die Stirnfläche des Vorsprungs aus. Es führt dazu, dass die Stirnfläche den Kontakt zum Substrat verliert und die Adhäsion abnimmt.

5. Analyse der Adhäsion

Eine Probe hat zwei Arten von Vorsprüngen mit zwei unterschiedlichen senkrechten Höhen der Stirnflächen.

Wenn die Vorbelastung $P_p$ unter dem Grenzwert $P_{p,1}$ liegt, ist die Belastung nicht ausreichend, dass die längeren Vorsprünge LP so komprimiert werden, dass die kürzeren Vorsprünge SP die Oberfläche kontaktieren. Die Abzugskraft $P_c$ ist dann einfach von der Anzahl an LP abhängig $n_{LP}$, welche in Kontakt mit der Oberfläche standen, multipliziert mit der Adhäsionskraft $F_{LP}$, welche bei jedem Vorsprung LP zum Ablösen notwendig ist:

$$\text{Für} \quad P_p < P_{p,1} \qquad P_c = F_{LP} * n_{LP} \qquad\qquad (1)$$

Sobald die Belastung $P_{p,1}$ erreicht ist, kommt die zweite Art von Vorsprüngen SP in Kontakt mit der Oberfläche. Abhängig von der Anzahl der Vorsprünge ($n_{SP}$) tragen diese mit einer zusätzlichen Kraft $F_{SP}$ zu der Adhäsion bei. Allerdings müssen die längeren Vorsprünge LP komprimiert werden, um den Kontakt der anderen Vorsprünge zu ermöglichen. Diese elastische Energie ist in LP gespeichert und reduziert die Adhäsion. Die daraus resultierende Kraft, welche durch die gespeicherte Energie auf die Oberfläche ausgeübt wird, ist identisch mit der Kraft zum Zusammendrücken der Vorsprünge $F_{compr.LP}$ multipliziert mit der Anzahl der LP:

$$\text{Für} \quad P_{p,1} < P_p < P_{p,2} \quad P_c = F_{LP}*n_{LP} + F_{SP}*n_{SP} - F_{compr,LP}*n_{LP} \qquad (2),$$

wobei $P_{p,2}$ die Belastung ist, bei denen die Vorsprünge beginnen zu knicken.

Bei hoher Vorlast jenseits der Belastung $P_{p,2}$, sinkt die Abzugskraft auf die "buckling pull-off force" $P_{c,buck}$.

$$\text{Für} \quad P_p > P_{p,2} \qquad P_c = P_{c,buckling} * (n_{LP} + n_{SP}) \qquad (3).$$

Daher können durch Messung der Adhäsionskraft eines kurzen Vorsprungs und eines langen Vorsprungs, sowie der für die Kompression des langen Vorsprungs erforderlichen Kraft, alle erforderlichen Parameter zur Beschreibung der schaltbaren Adhäsion einer solchen Probe bestimmt werden. Die Adhäsionskräfte der Vorsprünge $F_{LP}$ und $F_{SP}$ sind für kreisrunde Vorsprünge abhängig vom Radius r und dem Aspektverhältnis AR. Die Kraft für die Kompression $F_{compr.LP}$ hängt vor allen vom Aspektverhältnis AR und dem Elastizitätsmodul E des Vorsprungs ab. Eine Kopplung zwischen den Vorsprüngen oder eine mögliche Längenabhängigkeit des Biegens der Vorsprünge ist denkbar, wird in diesem vereinfachten Modell aber nicht beschrieben.

Wie in den Figuren 11 bis 13 gezeigt, beeinflussen das Aspektverhältnis und die Geschwindigkeit die Adhäsion der Probe. In der vorliegenden Erfindung wurde herausgefunden, dass eine Zunahme des Aspektverhältnisses zu einer Verringerung der Adhäsion führt. Während die Unterschiede bei AR 4,0 und 4,5 vernachlässigbar sind, so zeigen die Proben mit AR 5,0 eine deutlich geringere Adhäsion. Eine mögliche Erklärung könnte darin liegen, dass längere Vorsprünge in Bezug auf das Biegen und Knicken weniger stabil sind, als kürzere Vorsprünge. Dies könnte durch eine Anpassung des E-Moduls korrigiert werden.

Die Geschwindigkeitsabhängigkeit könnte auch durch das verwendete Material PDMS erklärt werden. PDMS kann bei Lastfrequenzen zwischen 0,1 und 100 Hz ein viskoelastisches Verhalten zeigen. Dies kann zum einen die Elastizität bei der Kompression verändern aber auch die Kontaktierung der Oberfläche verändern. Beide Effekte können die Adhäsion beeinflussen.

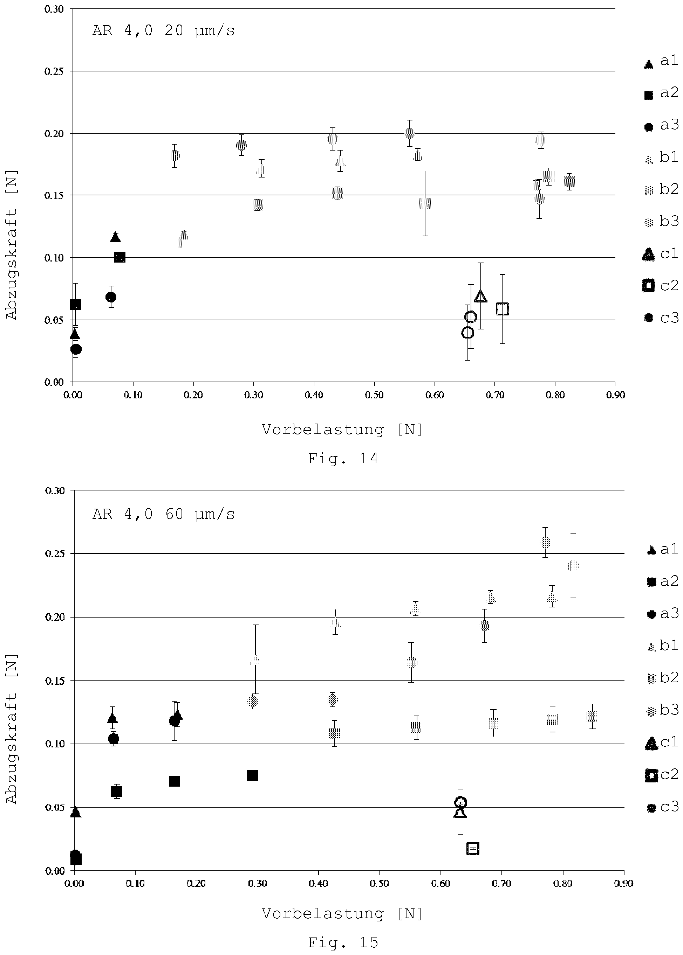

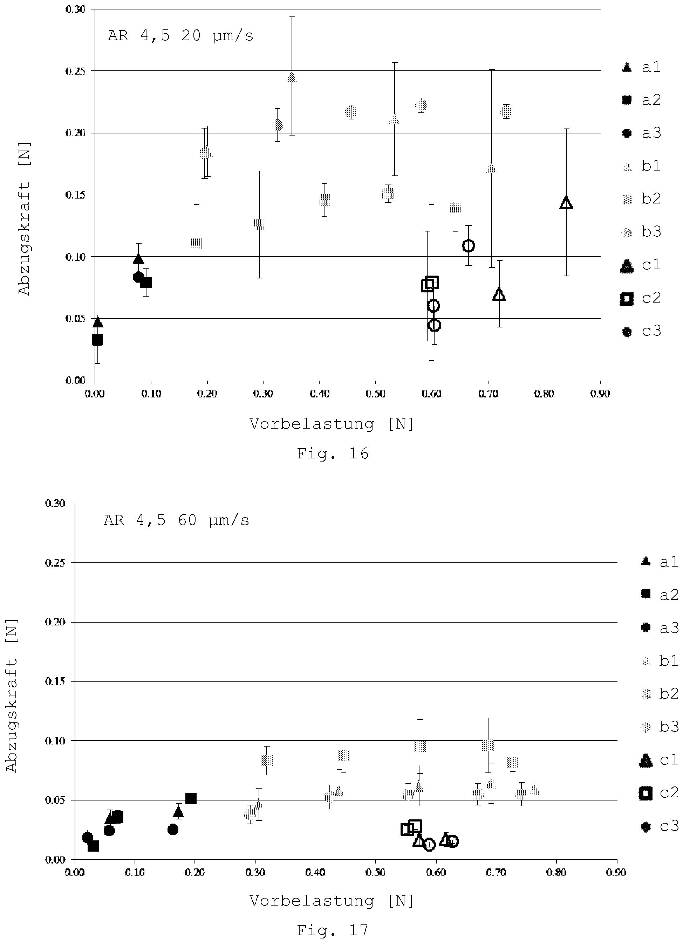

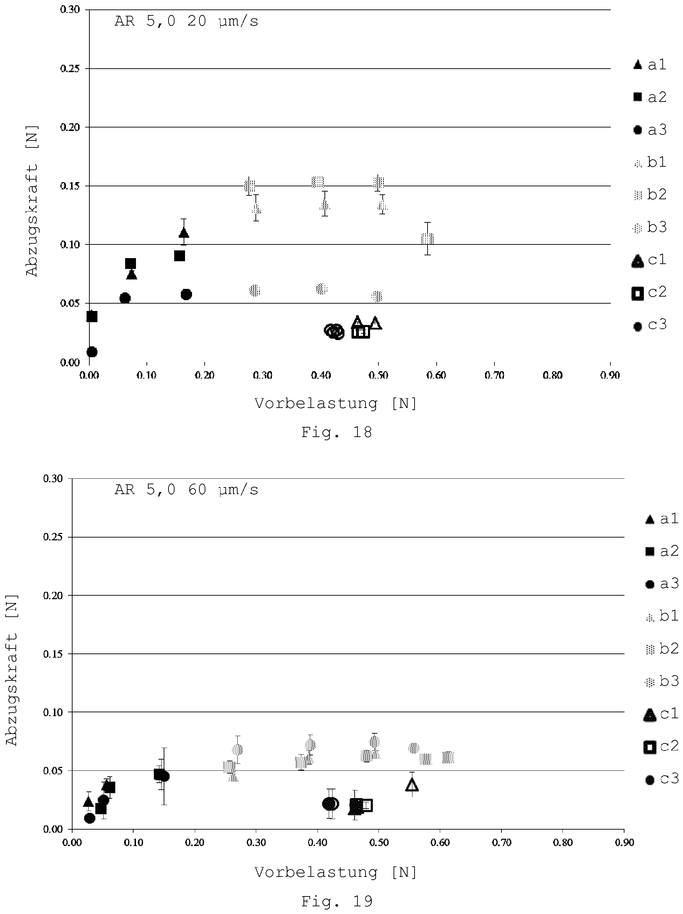

Die Figuren 14, 15, 16, 17, 18 und 19 zeigen die gemessene Abzugskraft in Abhängigkeit von der Vorbelastung für jeweils 3 Proben der jeweiligen Aspektverhältnisse AR 4,0, AR 4,5 und AR 5,0 bei verschiedenen Geschwindigkeiten. Die erhaltenen Ergebnisse wurden den verschiedenen Adhäsionsmodi (A, B oder C) zugeordnet. Dabei bedeuten a1, a2, a3 die Messung der Probe 1, 2 bzw. 3 zugeordnet Adhäsionsmodus A (d.h. geringe Vorbelastung, Adhäsion nur durch LP). Die Messungen b1, b2, b3 stehen für Probe 1, 2 bzw. 3 zugeordnet Adhäsionsmodus B (d.h. mittlere Vorbelastung, Adhäsion durch SP und LP). Die Messungen c1, c2, c3 stehen für Probe 1, 2 bzw. 3 zugeordnet Adhäsionsmodus C (d.h. hohe Vorbelastung, Abnahme der Adhäsion durch Knicken und Biegen der Vorsprünge)

Tabelle 1

| | Höhe SP [μm] | Höhe LP [μm] | Δ h [%] | Durchmesser SP [μm] | Durchmesser LP [μm] | Δ Durchmesser [%] |
|---|---|---|---|---|---|---|
| AR 4,0 | 1594 | 1697 | 6,5 | 567 | 634 | 11,8 |
| AR 4,5 | 1796 | 1876 | 4,5 | 621 | 684 | 10,1 |
| AR 5,0 | 1983 | 2100 | 5,9 | 635 | 681 | 7,2 |

Bezugszeichen

100 Strukturierte Oberfläche
104 Strukturierte Oberfläche mit Vorsprüngen mit verbreiterten Stirnflächen
105 Strukturierte Oberfläche mit zwei Arten von Vorsprüngen, welche sich in ihrer senkrechten Höhe unterscheiden
110 Silanschicht zur Passivierung
120 Substrat
130 Flüssiges PDMS
132 Tropfen von PDMS
134 Tropfen von PDMS
135 PDMS
137 Werkzeug zum Auftragen von PDMS
140 Erhitzte Oberfläche
200 Strukturierte Oberfläche
205 Oberfläche
210 Stamm / Vorsprung
215 Stirnfläche
220 Stamm / Vorsprung
225 Stirnfläche
230 Substrat
500 Vorsprung
502 Stirnfläche
504 Grundfläche
506 Überlappungsbereich

zitierte Literatur

D. Paretkar, M. Kamperman, A. S. Schneider, D. Martina, C. Creton, E. Arzt, Materials Science and Engineering: C 2011, 31, 1152.

M. Varenberg, S. Gorb, Journal of The Royal Society Interface 2008, 5, 785.

D. Paretkar, A. S. Schneider, E. Kroner, E. Arzt, Mrs Communications 2011, 1, 53.

**Patentansprüche**

1. Strukturierte Oberfläche (200) eines Festkörpers mit schaltbarer Adhäsion, wobei die Oberfläche (205) eine Strukturierung aufweist, die eine Vielzahl von Vorsprüngen (210, 220) umfasst, die mindestens jeweils einen Stamm (210, 220) aufweisen, wobei der Stamm eine von der Oberfläche (205) wegweisende Stirnfläche (215, 225) besitzt, **dadurch gekennzeichnet, dass**
die Vielzahl von Vorsprüngen mindestens zwei Arten von Vorsprüngen (210, 220) umfasst, welche sich mindestens in der senkrechten Höhe der Stirnfläche (215, 225) unterscheiden; und
das Material der Vorsprünge (210, 220) einen solchen Elastizitätsmodul aufweist, dass
abhängig von der Belastung eine oder mehrere Arten der Vorsprünge (210, 220) über ihre Stirnflächen (215, 225) eine Adhäsionskraft ausbilden, welche höher ist als die durch die eventuelle Kompression der Vorsprünge (210, 220) ausgeübte Kraft; und
mindestens eine Art der Vorsprünge (220) ein solches Aspektverhältnis aufweist, dass
bei dem Überschreiten einer bestimmten Belastung diese Vorsprünge (220) abknicken und die Adhäsionskraft durch Abknicken der Stirnflächen (225) stark abnimmt.

2. Strukturierte Oberfläche nach Anspruch 1, **dadurch gekennzeichnet, dass**
mindestens eine Art von Vorsprüngen (105) verbreiterte Stirnflächen aufweist.

3. Strukturierte Oberfläche nach einem der Ansprüche 1 oder 2, **dadurch gekennzeichnet, dass**
die Vorsprünge (210, 220) ein Aspektverhältnis von 1 bis 100 aufweisen.

4. Verfahren zur Oberflächenmodifizierung eines Objekts, um eine Oberfläche mit schaltbarer Adhäsion (200) zu erhalten, wobei die Oberfläche (205) einer Strukturierung unterzogen wird, so dass eine Vielzahl von Vorsprüngen (210, 220) gebildet wird, die mindestens jeweils einen Stamm (210, 220) aufweisen, wobei der Stamm eine von der Oberfläche (205) wegweisende Stirnfläche (215, 225) besitzt, **dadurch gekennzeichnet, dass**
die Vielzahl von Vorsprüngen mindestens zwei Arten von Vorsprüngen (210, 220) umfasst, welche sich mindestens in der senkrechten Höhe der Stirnfläche (215, 225) zur Oberfläche (205) unterscheiden; und
das Material der Vorsprünge (210, 220) einen solchen Elastizitätsmodul aufweist, dass
abhängig von der Belastung eine oder mehrere Arten der Vorsprünge über ihre Stirnflächen (215, 225) eine Adhäsionskraft ausbilden, welche höher ist als die durch die eventuelle Kompression der Vorsprünge ausgeübte Kraft; und
mindestens eine Art der Vorsprünge (210, 220) ein solches Aspektverhältnis aufweist, dass
bei dem Überschreiten einer bestimmten Belastung diese Vorsprünge abknicken und die Adhäsionskraft durch Abknicken der Stirnflächen stark abnimmt.

5. Verfahren zur Herstellung einer strukturierten Oberfläche (105) nach einem der Ansprüche 1 bis 3 umfassend die folgenden Schritte:

   a) Bereitstellen einer strukturierten Oberfläche mit mindestens einer Art von Vorsprüngen (104);
   b) Auftragen eines härtbaren Materials (134) auf die Stirnflächen mindestens eine Teils der Vorsprünge;
   c) Kontaktieren der Vorsprünge mit dem härtbaren Material mit einer Vorlage (140) für die Stirnfläche der erhöhten Vorsprünge;
   d) Aushärten des härtbaren Materials unter Bildung der erhöhten Vorsprünge;
   e) Ablösen der strukturierten Oberfläche (105) von der Vorlage.

6. Verfahren zum Schalten der Adhäsion einer Oberfläche nach einem der Ansprüche 1 bis 3 umfassend folgende Schritte:

   a) Kontaktieren der strukturierten Oberfläche (200) mit einem Substrat (230), wobei in Abhängigkeit von der auf die strukturierte Oberfläche ausgeübte Kraft folgende Fälle unterschieden werden können:

      a1) Kontaktierung der Art von Vorsprüngen (225) mit der höchsten senkrechten Höhe und Ausbildung einer geringen Adhäsion;
      a2) Kompression der kontaktierten Vorsprünge bis zur Kontaktierung der Vorsprünge (215) mit der nächstgeringeren senkrechten Höhe und Erhöhung der Adhäsionskraft;
      a3) Erhöhung der Kraft bis zum Umknicken mindestens einen Teils der Vorsprünge (215, 225) und starker Abnahme der Adhäsion.

7. Verbund von zwei Körpern, wobei die Schnittstelle eine strukturierte Oberfläche (200) nach einem der Ansprüche 1 bis 3 aufweist.

**Claims**

1. A structured surface (200) of a solid with switchable adhesion, wherein the surface (205) has a structuring comprising a multiplicity of projections (210, 220), which respectively have at least a trunk (210, 220), wherein the trunk possesses an end face (215, 225) pointing away from the surface (205), **characterized in that**
the multiplicity of projections comprises at least two types of projections (210, 220), which differ from one another at least in terms of the vertical height of the end face (215, 225); and
the material of the projections (210, 220) has a modulus of elasticity such that,
depending on the load, one or more types of projections (210, 220) form via their end faces (215, 225) an adhesive force which is higher than the force exerted by the possible compression of the projections (210, 220); and
at least one type of projections (220) has an aspect ratio such that,
if a specific load is exceeded, these projections (220) buckle and the adhesive force, as a result of buckling of the end faces (225), strongly decreases.

2. The structured surface as claimed in claim 1, **characterized in that**
at least one type of projections (105) has broadened end faces.

3. The structured surface as claimed in one of claims 1 or 2, **characterized in that**
the projections (210, 220) have an aspect ratio of 1 to 100.

4. A method for modifying the surface of an object in order to obtain a surface with switchable adhesion (200), wherein the surface (205) is subjected to a structuring, so that a multiplicity of projections (210, 220), which respectively have at least a trunk (210, 220), is formed, wherein the trunk possesses an end face (215, 225) pointing away from the surface (205), **characterized in that**
the multiplicity of projections comprises at least two types of projections (210, 220), which differ from one another at least in terms of the vertical height of the end face (215, 225) relative to the surface (205); and
the material of the projections (210, 220) has a modulus of elasticity such that,
depending on the load, one or more types of projections form via their end faces (215, 225) an adhesive force which is higher than the force exerted by the possible compression of the projections; and
at least one type of projections (210, 220) has an aspect ratio such that,
if a specific load is exceeded, these projections buckle and the adhesive force, as a result of buckling of the end faces, strongly decreases.

5. A method for producing a structured surface (105) as claimed in one of claims 1 to 3 comprising the following steps:

    a) provision of a structured surface having at least one type of projections (104);
    b) application of a hardenable material (134) to the end faces of at least some of the projections;
    c) contacting of the projections having the hardenable material with a model (140) for the end face of the elevated projections;
    d) hardening of the hardenable material, with formation of the elevated projections;
    e) detachment of the structured surface (105) from the model.

6. A method for switching the adhesion of a surface as claimed in one of claims 1 to 3, comprising the following steps:

    a) contacting of the structured surface (200) with a substrate (230), wherein, in dependence on the force exerted on the structured surface, the following cases can be differentiated:

        a1) contacting of the type of projections (225) having the highest vertical height and formation of a low adhesion;
        a2) compression of the contacted projections up to the point of contact of the projections (215) having the next lower vertical height, and increasing of the adhesive force;
        a3) increasing of the force up to the bending over of at least some of the projections (215, 225) and strong decrease in the adhesion.

7. A composite of two bodies, wherein the interface has a structured surface (200) as claimed in one of claims 1 to 3.

**Revendications**

1. Surface structurée (200) d'un corps solide à adhérence modifiable, la surface (205) ayant une structure qui comprend une pluralité de saillies (210, 220) qui comportent chacune au moins un fût (210, 220), le fût possédant une face d'extrémité (215, 225) à l'opposé de la surface (205), **caractérisée en ce que**
la pluralité de saillies comprend au moins deux types de saillies (210, 220) qui se distinguent au moins par la hauteur verticale de la face d'extrémité (215, 225) ; et
la matière des saillies (210, 220) a un module d'élasticité tel que
en fonction de la charge, au moins un type de saillies (210, 220) forment, par leurs faces d'extrémité (215, 225), une force d'adhérence supérieure à la force exercée par la compression éventuelle des saillies (210, 220) ; et
au moins un type de saillies (220) a un rapport de forme tel que
en cas de dépassement d'une certaine charge, ces saillies (220) subissent un flambage par compression et la force d'adhérence décroît brusquement en raison du flambage par compression des faces d'extrémité (225).

2. Surface structurée selon la revendication 1, **caractérisée en ce que**
au moins un type de saillies (105) comportent des faces d'extrémité élargies.

3. Surface structurée selon l'une des revendications 1 et 2, **caractérisée en ce que**
les saillies (210, 220) ont un rapport de forme de 1 à 100.

4. Procédé de modification de surface d'un objet pour obtenir une surface d'adhérence modifiable (200), la surface (205) étant soumise à une structuration de manière à former une pluralité de saillies (210, 220) qui comportent chacune au moins un fût (210, 220), le fût possédant une surface d'extrémité (215, 225) à l'opposé de la surface (205), **caractérisé en ce que**
la pluralité de saillies comprend au moins deux types de saillies (210, 220) qui se distinguent au moins par la hauteur verticale de la face d'extrémité (215, 225) par rapport à la surface (205) ; et
la matière des saillies (210, 220) a un module d'élasticité tel que
en fonction de la charge, au moins un type de saillies forment une force d'adhérence sur leurs faces d'extrémité (215, 225) qui est supérieure à la force exercée par la compression éventuelle des saillies ; et
au moins un type de saillies (210, 220) a un rapport de forme tel que
en cas de dépassement d'une certaine charge, ces projections subissent un flambage par compression et la force d'adhérence décroît brusquement en raison du flambage par compression des surfaces d'extrémité.

5. Procédé de fabrication d'une surface structurée (105) selon l'une des revendications 1 à 3, comprenant les étapes suivantes :

   a) fournir une surface structurée comportant au moins un type de saillies (104) ;
   b) appliquer une matière durcissable (134) sur les surfaces d'extrémité d'au moins une partie des saillies ;
   c) mettre les saillies pourvues de la matière durcissable en contact avec un gabarit (140) destiné à la face d'extrémité des saillies en relief ;
   d) faire durcir la matière durcissable pour former les saillies en relief ;
   e) détacher la surface structurée (105) du gabarit.

6. Procédé de modification de l'adhérence d'une surface selon l'une des revendications 1 à 3, comprenant les étapes suivantes :

   a) mettre la surface structurée (200) en contact avec un substrat (230), les cas suivants pouvant être distingués en fonction de la force exercée sur la surface structurée :

   a1) contact avec le type de saillies (225) ayant la hauteur verticale la plus élevée et constitution d'une faible adhérence ;
   a2) compression des saillies en contact jusqu'au contact des saillies (215) ayant la hauteur verticale inférieure la plus proche et augmentation de la force d'adhérence ;
   a3) augmentation de la force jusqu'au flambage d'au moins une partie des saillies (215, 225) et forte diminution de l'adhérence.

7. Composite formé de deux corps, l'interface comportant une surface structurée (200) selon l'une des revendications 1 à 3.

Fig. 1

Fig. 2

Fig. 3

LP      SP      LP      SP      LP

105

Fig. 4

Fig. 5

a)

b)

Fig. 6

Fig. 7

Fig. 8

a)

b)

Fig. 9

Fig. 10

Fig. 11

Fig. 12

Fig. 13

Fig. 14

Fig. 15

Fig. 16

Fig. 17

Fig. 18

Fig. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• DE 102006050365 A1

**In der Beschreibung aufgeführte Nicht-Patentliteratur**

• **KRONER, E. ; BLAU, J. ; ARZT E.** An adhesion measurement setup for bioinspired fibrillar surfaces using flat probes. *Review of Scientific Instruments,* 2012, 83
• **D. PARETKAR ; M. KAMPERMAN ; A. S. SCHNEIDER ; D. MARTINA ; C. CRETON ; E. ARZT.** *Materials Science and Engineering,* 2011, vol. C (31), 1152
• **M. VARENBERG ; S. GORB.** *Journal of The Royal Society Interface,* 2008, vol. 5, 785
• **D. PARETKAR ; A. S. SCHNEIDER ; E. KRONER ; E. ARZT.** *Mrs Communications,* 2011, vol. 1, 53